(19) **Europäisches Patentamt / European Patent Office / Office européen des brevets**

(11) **EP 4 684 976 A1**

(12) **EUROPEAN PATENT APPLICATION**
published in accordance with Art. 153(4) EPC

(43) Date of publication:
**28.01.2026 Bulletin 2026/05**

(21) Application number: **24774632.4**

(22) Date of filing: **01.03.2024**

(51) International Patent Classification (IPC):
**B41M 5/00** (2006.01)    **B41J 2/01** (2006.01)
**B41J 2/21** (2006.01)    **C09D 11/40** (2014.01)

(52) Cooperative Patent Classification (CPC):
**B41J 2/01; B41J 2/21; B41M 5/00; C09D 11/40**

(86) International application number:
**PCT/JP2024/007873**

(87) International publication number:
**WO 2024/195487 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.03.2023 JP 2023047328**

(71) Applicant: **FUJIFILM Corporation
Tokyo 106-8620 (JP)**

(72) Inventor: **IKOSHI, Masao
Ashigarakami-gun, Kanagawa 258-8577 (JP)**

(74) Representative: **Klunker IP
Patentanwälte PartG mbB
Destouchesstraße 68
80796 München (DE)**

(54) **IMAGE RECORDING METHOD**

(57)    An image recording method including a step of applying a pretreatment liquid, a first ink, and a second ink in this order onto a non-permeable substrate, in which a value (1) is 28.0 to 35.0 and a value (2) is -200 to 200. V1 represents a volume (pL) of a liquid droplet of the first ink, θ represents a contact angle (°) of the first ink, Av1 represents an acid value (mgKOH/g) of the first ink, Av2 represents an acid value (mgKOH/g) of the second ink, S1 represents a solid content amount (% by mass) of the first ink, S2 represents a solid content amount (% by mass) of the second ink, and T represents a droplet interval (seconds) between the first ink and the second ink.

$$\text{Value (1)} = (V1)^{1/3} \times (1 + \cos\theta) \times 14$$

$$\text{Value (2)} = |Av1/S1 - Av2/S2| \times (Av2 - Av1)/T$$

## FIG. 1

EP 4 684 976 A1

**Description**

**BACKGROUND OF THE INVENTION**

1. Field of the Invention

The present disclosure relates to an image recording method and an image recording apparatus.

2. Description of the Related Art

Various studies have been conducted on an image recording method using a pretreatment liquid (also referred to as an anchor coating agent) and an ink jet ink, compared to the related art.

For example, JP2022-102449A discloses a set of recording liquids containing an aqueous ink for an ink jet, which contains water, a pigment, a resin, an alkanediol-based solvent having 3 to 4 carbon atoms, and a surfactant having a trisiloxane skeleton, and an anchor coating agent containing water and a polyvalent metal salt, which enables obtaining a printed material with good filling, no bleeding of an image, and excellent color developability even in printing on a non-absorbent substrate or high-speed printing, and has excellent temporal stability.

**SUMMARY OF THE INVENTION**

In an image recording method using a pretreatment liquid and an ink jet ink, a multicolor image may be recorded by applying a pretreatment liquid containing water, an aggregating agent, and a resin, a first ink containing water, a first pigment, and a resin, and a second ink containing water, a second pigment, and a resin in this order onto a non-permeable substrate.

In a case of recording a multicolor image, at least one of bleeding between colors or dot embedding of the second ink may occur.

The burying of dots of the ink of the second color or later can cause a decrease in the color gamut of the multicolor image.

An object of an embodiment of the present disclosure is to provide an image recording method capable of suppressing bleeding between colors and dot embedding of a second ink in a case where a multi-color image is recorded by applying, in this order, a pretreatment liquid containing water, an aggregating agent, and a resin, a first ink containing water, a first pigment, and a resin, and a second ink containing water, a second pigment, and a resin onto a non-permeable substrate.

An object of another embodiment of the present disclosure is to provide an image recording apparatus used in the image recording method of the present disclosure.

The present disclosure includes the following aspects.

<1> An image recording method comprises: a step of applying a pretreatment liquid containing water, an aggregating agent, and a resin onto a non-permeable substrate; a step of applying, by an ink jet recording method, a first ink containing water, a first pigment, and a resin onto a region of the non-permeable substrate onto which the pretreatment liquid has been applied; and a step of applying, by an ink jet recording method, a second ink containing water, a second pigment, and a resin onto a region of the non-permeable substrate onto which the pretreatment liquid and the first ink have been applied, in which Value (1) is 28.0 to 35.0, and Value (2) is -200 to 200.

$$\text{Value (1)} = (V1)^{1/3} \times (1 + \cos\theta) \times 14$$

$$\text{Value (2)} = |Av1/S1 - Av2/S2| \times (Av2 - Av1)/T$$

In Value (1) V1 represents a volume of a liquid droplet of the first ink in a case of application of the first ink, in units of pL, and $\theta$ represents a contact angle of the first ink at a time point when T seconds have elapsed after the first ink has landed on the region onto which the pretreatment liquid has been applied on the non-permeable substrate, the contact angle being in units of °.

In Value (2), Av1 represents an acid value of the first ink in units of mgKOH/g, Av2 represents an acid value of the second ink in units of mgKOH/g, S1 represents a solid content of the first ink in units of % by mass, S2 represents a solid content of the second ink in units of % by mass, and T represents a droplet interval between the first ink and the second ink in units of seconds.

<2> The image recording method according to <1>, in which Value (3) is -2000 to 2000,

$$\text{Value (3)} = \text{Value (2)} \times |L2^* - L1^*|$$

In the value (3), L1* represents an L* value of the first ink in the L*a*b* color system, and L2* represents an L* value of the second ink in the L*a*b* color system.

\<3\> The image recording method according to \<1\> or \<2\>, in which Av1 is larger than Av2.

\<4\> The image recording method according to any one of \<1\> to \<3\>, in which an L* value L1* of the first ink in an L*a*b* color system is lower than an L* value L2* of the second ink in the L*a*b* color system.

\<5\> The image recording method according to any one of \<1\> to \<4\>, further comprises: a step of applying, by an ink jet recording method, a third ink containing water, a third pigment, and a resin onto a region of the non-permeable substrate onto which the pretreatment liquid, the first ink, and the second ink have been applied; and a step of applying, by an ink jet recording method, a fourth ink containing water, a fourth pigment, and a resin onto a region of the non-permeable substrate onto which the pretreatment liquid, the first ink, the second ink, and the third ink have been applied, in which in a case where an acid value of the third ink is represented by Av3 in units of mgKOH/g and an acid value of the fourth ink is represented by Av4 in units of mgKOH/g, a relationship of Inequality (4) is satisfied.

$$Av1 > Av2 > Av3 > Av4 \ ... \ \text{Inequality (4)}.$$

\<6\> The image recording method according to \<5\>, further comprises : a step of applying, by an ink jet recording method, a white ink containing water, a white pigment, and a resin onto a region of the non-permeable substrate onto which the pretreatment liquid, the first ink, the second ink, the third ink, and the fourth ink have been applied, in which an acid value of the white ink in units of mgKOH/g is higher than any of Avl, Av2, Av3, and Av4.

\<7\> An image recording apparatus used in the image recording method according to any one of \<1\> to \<6\>, the image recording apparatus comprises: a pretreatment liquid applying device that applies the pretreatment liquid onto one surface of the non-permeable substrate; a first ink jet head that applies the first ink; and a second ink jet head that applies the second ink, wherein Value (1) is 28.0 to 35.0, and Value (2) of -200 to 200.

According to an embodiment of the present disclosure, there is provided an image recording method capable of suppressing bleeding between colors and dot embedding of a second ink in a case where a pretreatment liquid containing water, an aggregating agent, and a resin, a first ink containing water, a first pigment, and a resin, and a second ink containing water, a second pigment, and a resin are applied in this order onto a non-permeable substrate to record a multicolor image.

According to another embodiment of the present disclosure, an image recording apparatus used in the image recording method of the present disclosure is provided.

**BRIEF DESCRIPTION OF THE DRAWINGS**

Fig 1 is a diagram conceptually showing an example of an image recording apparatus used in an image recording method according to the present disclosure.

Fig 2 is a diagram showing a character image used in Examples.

**DESCRIPTION OF THE PREFERRED EMBODIMENTS**

In the present disclosure, the numerical ranges shown using "to" means ranges including the numerical values described before and after "to" as the minimum value and the maximum value.

In a numerical range described in a stepwise manner in the present specification, an upper limit value or a lower limit value described in a certain numerical range may be replaced with an upper limit value or a lower limit value in another numerical range described in a stepwise manner. In addition, in the numerical range described in the present specification, an upper limit value and a lower limit value described in a certain numerical range may be replaced with values shown in Examples.

In the present disclosure, in a case in which a plurality of substances corresponding to respective components in a composition are present, the amount of the respective components in the composition means the total amount of the plurality of substances present in the composition unless otherwise specified.

In the present disclosure, a combination of two or more preferred aspects is a more preferred aspect.

In the present disclosure, the meaning of the term "step" includes not only an independent step but also a step whose intended purpose is achieved even in a case in which the step is not clearly distinguished from other steps.

In the present disclosure, the "image" means an ink film itself in a case where one type of ink is used, and means a laminated film of a plurality of ink films in a case where a plurality of inks are used in an overlapping manner.

In the present disclosure, "image recording" means formation of the image.

The concept of "image" in the present disclosure also includes a solid image.

[Image Recording Method]

The image recording method of the present disclosure is an image recording method including a step of applying a pretreatment liquid containing water, an aggregating agent, and a resin onto a non-permeable substrate; a step of applying, by an ink jet recording method, a first ink containing water, a first pigment, and a resin onto a region of the non-permeable substrate onto which the pretreatment liquid has been applied; and a step of applying, by an ink jet recording method, a second ink containing water, a second pigment, and a resin onto a region of the non-permeable substrate onto which the pretreatment liquid and the first ink have been applied, wherein Value (1) is 28.0 to 35.0, and Value (2) is -200 to 200.

$$\text{Value (1)} = (V1)^{1/3} \times (1 + \cos\theta) \times 14$$

$$\text{Value (2)} = |Av1/S1 - Av2/S2| \times (Av2 - Av1)/T$$

In Value (1) V1 represents a volume of a liquid droplet of the first ink in a case of application of the first ink, in units of pL, and $\theta$ represents a contact angle of the first ink at a time point when T seconds have elapsed after the first ink has landed on the region onto which the pretreatment liquid has been applied on the non-permeable substrate, the contact angle being in units of °.

In Value (2), Av1 represents an acid value of the first ink in units of mgKOH/g, Av2 represents an acid value of the second ink in units of mgKOH/g, S1 represents a solid content of the first ink in units of % by mass, S2 represents a solid content of the second ink in units of % by mass, and T represents a droplet interval between the first ink and the second ink in units of seconds.

According to the image recording method of the present disclosure, in a case where a multicolor image is recorded by applying, in this order, a pretreatment liquid containing water, an aggregating agent, and a resin, a first ink containing water, a first pigment, and a resin, and a second ink containing water, a second pigment, and a resin onto a non-permeable substrate, bleeding between colors and dot embedding of the second ink can be suppressed.

The present inventor has found that, in a case where each of the value (1) and the value (2) based on volume V1 of the liquid droplet of the first ink, contact angle $\theta$ of the first ink at a time point when T seconds have elapsed from a time point when the first ink has landed (that is, a time point when the second ink has landed), acid value Av1 of the first ink, acid value Av2 of the second ink, solid content S1 of the first ink, solid content S2 of the second ink, and droplet spacing T between the first ink and the second ink are each in the above-described ranges, bleeding of the multicolor image and the dot embedding of the second ink can be suppressed.

Hereinafter, the image recording method according to the embodiment of the present disclosure will be described in more detail.

$$<\text{Value (1)} [= (V1)^{1/3} \times (1 + \cos\theta) \times 14)]>$$

**In** the image recording method of the present disclosure, the value (1) $[(V1)^{1/3} \times (1 + \cos\theta) \times 14)]$ is 28.0 to 35.0.

In a case where the value (1) $[=(V1)^{1/3} \times (1 + \cos\theta) \times 14)]$ is 28.0 or greater, the second ink can be suppressed from being buried. Further, streaks of the multicolor image are also suppressed.

In a case where the value (1) is 35.0 or less, bleeding of the multicolor image can be suppressed.

The value (1) is preferably 28.0 to 34.0, more preferably 29.0 to 34.0, still more preferably 30.0 to 34.0, and particularly preferably 31.0 to 34.0.

V1 is a volume (pL) of a liquid droplet of the first ink during the jetting of the first ink.

V1 is preferably 0.3 to 5.0, more preferably 0.5 to 4.0, and still more preferably 1.0 to 3.0.

In the present disclosure, a method for measuring the volume of the liquid droplet of the ink is not particularly limited, and examples thereof include a weight method and a camera imaging method.

The weight method is performed, for example, by the following method.

The ink is jetted into a container for measurement a predetermined number of times of jetting. The total mass of the liquid droplets jetted into the container for measurement is measured. The size of the liquid droplet is calculated based on the following formula.

Size (pL) of liquid droplet = (Total mass (g) of jetted liquid droplets ÷ Number of times of jetting) ÷ Specific gravity (g/cm$^3$) of ink × 10$^9$

The camera imaging method is performed by, for example, the following method.

An ink jet flight droplet observation device (product name "jetXpert", manufactured by imageXpert) is installed in the ink jet head. The size of the liquid droplet is calculated by imaging the liquid droplet.

Although not related to the value (1), a preferable range of V2, which is the volume (pL) of the liquid droplet of the second ink during the jetting of the second ink, is the same as the preferable range of V1, which is the volume of the liquid droplet of the first ink during the jetting of the first ink.

Further, the preferred range of the volume of the liquid droplets of the ink during the jetting of other inks (for example, the third ink, the fourth ink, and the like) that can be optionally used is also the same as the preferred range of V1, which is the volume of the liquid droplets of the first ink during the jetting of the first ink described above.

In the value (1), θ is a contact angle (°) of the first ink at a time point (that is, a time point at which the second ink lands) at which T seconds have elapsed from the landing of the first ink.

θ is measured as follows.

The pretreatment liquid is applied onto the non-permeable substrate and dried, and then the non-permeable substrate onto which the pretreatment liquid has been applied is cut out to obtain a measurement sample. 2.0 μL of the first ink is added dropwise onto the region of the measurement sample to which the pretreatment liquid has been applied, and the contact angle θ (°) of the first ink at a point in time when T seconds have elapsed from the dropwise addition is measured.

The contact angle is measured at 20°C using a contact angle meter (for example, product name "DM-501", manufactured by Kyowa Interface Science Co., Ltd.).

<Value (2) [= |Av1/S1 - Av2/S2| × (Av2 - Av1)/T]>

In the image recording method of the present disclosure, the value (2) [= |Av1/S1 - Av2/S21 × (Av2 - Av1)/T] is -200 to 200.

In a case where the value (2) is -200 or greater, the second ink can be suppressed from being buried.

In a case where the value (2) is 200 or less, bleeding of the multicolor image can be suppressed.

The value (2) is preferably -150 to 150, more preferably -60 to 60, and still more preferably -20 to 20.

Av1 is the acid value (mgKOH/g) of the first ink.

Av1 is preferably 1.0 to 6.0 and more preferably 1.0 to 5.0.

Av1 is calculated by preparing a dilution in which the first ink is diluted 10-fold with tetrahydrofuran (THF), completely neutralizing the obtained diluted liquid with KOH, and then titrating with HCl.

Av2 is the acid value (mgKOH/g) of the second ink.

Av2 is also calculated in the same manner as Av1 described above.

Av2 is preferably 1.0 to 6.0 and more preferably 1.0 to 5.0.

That is, Av1 and Av2 are calculated by preparing a dilution in which each of the first ink and the second ink is diluted 10 times in terms of volume with tetrahydrofuran (THF), completely neutralizing the obtained diluted liquid with KOH, and then titrating the diluted liquid with HCl.

It is preferable that Av1 is larger than Av2 (that is, Av1 > Av2 is satisfied).

In this manner, bleeding of the multicolor image is further suppressed.

In a case where Av1 is larger than Av2, a value obtained by subtracting Av1 from Av2 is preferably 0.3 or more, more preferably 0.5 to 3.0, and still more preferably 0.5 to 2.0.

S1 is the amount of the solid content (% by mass) of the first ink, that is, the content (% by mass) of the solid content with respect to the total amount of the first ink.

S1 is, for example, the total amount of the first pigment and the resin in the first ink.

S1 can be obtained based on the mass of the dried product obtained by filtering the first ink after precipitating the first ink with 0.1 N hydrochloric acid, filtering the first ink while washing with 0.1 N hydrochloric acid, and drying the remaining solid contents.

S2 described later, that is, the solid content (% by mass) of the second ink can also be obtained in the same manner as in S1.

S1 is preferably 2.0 to 20.0, more preferably 3.0 to 20.0, still more preferably 5.0 to 20.0, and even still more preferably 7.0 to 15.0.

S2 is the solid content (% by mass) of the second ink, that is, the content (% by mass) of the solid content with respect to the total amount of the second ink.

S2 is, for example, the total amount of the second pigment and the resin in the second ink.

T is a jet droplet interval (seconds) between the first ink and the second ink.

T is, specifically, a time from when the first ink lands on a certain point X on the non-permeable substrate to when the second ink lands on the certain point X.

T is preferably 0.10 to 2.00, more preferably 0.20 to 1.50, and still more preferably 0.20 to 1.20.

<div align="center">

### $<\text{Value (3) } [= \text{Value (2)} \times |L2^* - L1^*|]>$

</div>

In the image recording method of the present disclosure, the value (3) [= value (2) × |L2* - L1*|] is preferably -10000 to 10000, more preferably -4000 to 4000, even more preferably -2000 to 2000, and particularly preferably -1500 to 1500.

In the value (3), L1* represents an L* value of the first ink in the L*a*b* color system, and L2* represents an L* value of the second ink in the L*a*b* color system.

In a case where the value (3) is -10000 or greater, the immersion of the dots of the second ink can be further suppressed.

In a case where the value (3) is 10000 or less, the bleeding of the multicolor image can be further suppressed.

L1* is measured by recording a monochrome solid image of the first ink on the non-permeable substrate, and measuring the L* value of the monochrome solid image through the non-permeable substrate from the rear surface of the non-permeable substrate on which the monochrome solid image is recorded, that is, the surface opposite to the image recording surface, using X-rite exact (manufactured by X-Rite, Inc.).

In this case, a white surface portion of a concealment rate measurement test paper (manufactured by TP Giken Co., Ltd.) is placed on the image recording surface side of the non-permeable substrate to measure L1*.

L2* described below is also measured in the same manner as L1*.

L1* is preferably 5.0 to 100.0, more preferably 5.0 to 20.0, and still more preferably 5.0 to 15.0.

L2* is preferably 5.0 to 100.0, more preferably 30.0 to 100.0, and still more preferably 50.0 to 100.0.

|L2*-L1*| is preferably 5.0 to 100.0 and more preferably 5.0 to 90.0.

It is preferable that L1* is lower than L2*.

In this manner, bleeding of the multicolor image can be further suppressed.

<Non-permeable Substrate>

In the image recording method of the present disclosure, an image is recorded on a non-permeable substrate.

In the present disclosure, impermeability of the non-permeable substrate denotes a property that a water absorption rate in 24 hours, which is measured in conformity with ASTM D570-98 (2018), is 2.5% or less. Here, the unit "%" of the water absorption rate is on a mass basis. The above-described water absorption rate is preferably 1.0% or less and more preferably 0.5% or less.

Examples of the material of the non-permeable substrate include glass, a metal (such as aluminum, zinc, or copper), and a resin (such as polyvinyl chloride, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinyl acetal, nylon, or an acrylic resin).

It is preferable that the material of the non-permeable substrate is a resin. That is, it is preferable that the non-permeable substrate is a resin substrate.

Among these, from the viewpoint of general-purpose properties, the material of the non-permeable substrate is preferably polypropylene, polyethylene, polyethylene terephthalate, nylon, an acrylic resin, or polyvinyl chloride.

As a shape of the non-permeable substrate, a sheet-like (film-like) or a plate-like non-permeable substrate is preferable. Examples of the non-permeable substrate having such a shape include a glass plate, a metal plate, a resin sheet (resin film), paper on which plastic is laminated, paper on which a metal is laminated or vapor-deposited, and a plastic sheet (plastic film) on which a metal is laminated or vapor-deposited.

Examples of the non-permeable substrate made of a resin include a resin sheet (resin film), and more specific examples thereof include a flexible packaging material for packaging food or the like, and a panel for guiding the floor of a mass retailer.

Examples of the non-permeable substrate also include a textile (woven fabric) or nonwoven fabric formed of non-permeable fibers, in addition to the sheet-like (film-like) or plate-like non-permeable substrate.

The non-permeable substrate may be subjected to a hydrophilization treatment. Examples of the hydrophilization treatment include a corona treatment, a plasma treatment, a flame treatment, a heat treatment, an abrasion treatment, a light irradiation treatment (such as a UV treatment), and a flame treatment, but the hydrophilization treatment is not limited thereto. The corona treatment can be performed, for example, using CORONA MASTER (product name "PS-10S", manufactured by Shinko Electric & Instrumentation Co., Ltd.). The conditions for the corona treatment may be appropriately selected according to the kind of the non-permeable substrate and the like.

The non-permeable substrate may be a non-permeable substrate having transparency.

Here, the non-permeable substrate having transparency means that the transmittance of visible light having a wavelength of 400 nm to 700 nm is 80% or more. The transmittance of the non-permeable substrate with respect to visible light having a wavelength of 400 nm to 700 nm is preferably 90% or more.

In a case where the non-permeable substrate is a non-permeable substrate having transparency, the image is easily visually recognized through the non-permeable substrate from an image non-recorded surface side of the non-permeable substrate.

For example, with the non-permeable substrate having transparency, in a case where a pretreatment liquid described later, a non-white ink described later, and a white ink described later are applied onto the non-permeable substrate in this order to record an image, a non-white image (for example, a pattern image such as a character and a figure) with a white image (for example, a solid image) as a background is easily visually recognized through the non-permeable substrate from the image non-recorded surface side of the non-permeable substrate.

<Step of Applying Pretreatment Liquid>

The image recording method of the present disclosure includes a step of applying a pretreatment liquid containing water, an aggregating agent, and a resin onto a non-permeable substrate.

(Pretreatment Liquid)

-Water-

The pretreatment liquid contains water.

A content of water is preferably 50% by mass or more and more preferably 60% by mass or more with respect to the total amount of the pretreatment liquid.

The upper limit of the content of water depends on the amount of other components, but is preferably 90% by mass or less and more preferably 80% by mass or less with respect to the total amount of the pretreatment liquid.

-aggregating agent-

The pretreatment liquid contains at least one aggregating agent.

The aggregating agent in the pretreatment liquid aggregates the components in the ink on the non-permeable substrate. As a result, image quality of the image can be improved.

The aggregating agent is preferably at least one selected from the group consisting of an organic acid and a polyvalent metal compound.

Preferred examples of the aggregating agent include aggregating agents described in paragraphs 0122 to 0130 of WO2020/195360A.

Hereinafter, preferred aspects of each of the organic acid, the polyvalent metal compound, the metal complex, and the cationic polymer, which can be used as the aggregating agent, will be described.

--Organic Acid--

Examples of the organic acid include an organic compound having an acidic group.

Examples of the acidic group include a phosphoric acid group, a phosphonic acid group, a phosphinic acid group, a sulfuric acid group, a sulfonic acid group, a sulfinic acid group, and a carboxy group.

Among these, from the viewpoint of the aggregation rate of the ink, as the acidic group, a phosphoric acid group or a carboxy group is preferable, and a carboxy group is more preferable.

It is preferable that at least a part of the acidic group is dissociated in the pretreatment liquid.

Examples of the organic compound having a carboxy group include (meth)acrylic acid, poly(meth)acrylic acid, acetic acid, formic acid, benzoic acid, glycolic acid, malonic acid, malic acid (preferably DL-malic acid), maleic acid, succinic acid, glutaric acid, pimelic acid, adipic acid, fumaric acid, citric acid, tartaric acid, phthalic acid, 4-methylphthalic acid, lactic acid, pyrrolidone carboxylic acid, pyrone carboxylic acid, pyrrole carboxylic acid, furan carboxylic acid, pyridine carboxylic acid, coumaric acid, thiophene carboxylic acid, and nicotinic acid.

Among these, from the viewpoint of aggregation rate of the ink, as the organic compound having a carboxy group, di- or higher valent carboxylic acid (hereinafter, also referred to as polyvalent carboxylic acid) is preferable, and dicarboxylic acid is more preferable.

Specifically, as the polyvalent carboxylic acid, malonic acid, malic acid, maleic acid, succinic acid, glutaric acid, pimelic acid, adipic acid, fumaric acid, tartaric acid, 4-methylphthalic acid, or citric acid is preferable; and malonic acid, malic acid, tartaric acid, succinic acid, glutaric acid, pimelic acid, adipic acid, or citric acid is more preferable.

It is preferable that the organic acid has a low pKa (for example, 1.0 to 5.0). As a result, surface charge of particles of, for example, the pigment stably dispersed in the ink by a weakly acidic functional group such as a carboxy group, resin particles, and the like can be reduced by bringing the ink into contact with the organic acid having a lower pKa to degrade dispersion stability.

It is preferable that the organic acid has a low pKa, high solubility in water, and a valence of divalent or more. In addition, it is more preferable that the organic acid has a high buffer capacity in a pH region with a pKa lower than a pKa of the functional group (for example, a carboxy group) which stably disperses particles in the ink.

--Polyvalent Metal Compound--

Examples of the polyvalent metal compound include a polyvalent metal salt.

Examples of the polyvalent metal salt include an organic acid polyvalent metal salt and an inorganic acid polyvalent metal salt.

As the organic acid polyvalent metal salt, a polyvalent metal salt of the above-described organic acid (for example, formic acid, acetic acid, lactic acid, or benzoic acid) is preferable.

As the inorganic acid polyvalent metal salt, a nitric acid polyvalent metal salt, a hydrochloric acid polyvalent metal salt, or a thiocyanic acid polyvalent metal salt) is preferable.

Examples of the polyvalent metal salt include salts of alkaline earth metals of Group 2 (such as magnesium and calcium) in the periodic table, salts of transition metals of Group 3 (such as lanthanum) in the periodic table, salts of metals of Group 13 (such as aluminum) in the periodic table, and salts of lanthanides (such as neodymium).

As the polyvalent metal salt, a calcium salt, a magnesium salt, or an aluminum salt is preferable, and a calcium salt or a magnesium salt is more preferable.

As the polyvalent metal compound, an organic acid polyvalent metal salt is preferable, and an organic acid calcium salt or an organic acid magnesium salt is more preferable.

It is preferable that at least a part of the polyvalent metal compound is dissociated into polyvalent metal ions and counterions in the pretreatment liquid.

A content of the aggregating agent in the pretreatment liquid is preferably 0.1% by mass to 40% by mass, more preferably 0.1% by mass to 30% by mass, still more preferably 1% by mass to 20% by mass, and even more preferably 1% by mass to 10% by mass with respect to the total amount of the pretreatment liquid.

-Resin-

The pretreatment liquid contains at least one resin.

The resin in the pretreatment liquid contributes to film-forming properties of the pretreatment liquid (that is, formability of the pretreatment liquid film).

As the resin in the pretreatment liquid, the same resin as the resin in the ink (for example, the resin particles) can be used.

A content of the resin in the pretreatment liquid is not particularly limited.

The content of the resin is preferably 0.5% by mass to 30% by mass, more preferably 1% by mass to 20% by mass, and particularly preferably 1% by mass to 15% by mass with respect to the total amount of the pretreatment liquid.

-Water-Soluble Organic Solvent-

The pretreatment liquid may contain at least one water-soluble organic solvent.

As the water-soluble organic solvent in the pretreatment liquid, the same water-soluble organic solvent as the water-soluble organic solvent which can be contained in the ink can be used.

-Additive-

The pretreatment liquid may contain an additive such as a surfactant, a water-soluble resin, a co-sensitizer, an ultraviolet absorbing agent, an antioxidant, a fading inhibitor, a conductive salt, and a basic compound, as necessary.

-Physical Properties-

A pH (25°C) of the pretreatment liquid is preferably 2.0 to 7.0 and more preferably 2.0 to 4.0. The pH of the pretreatment liquid is measured by the same method as in the pH of the ink.

From the viewpoint of coating properties of the pretreatment liquid, a viscosity of the pretreatment liquid is preferably 0.5 mPa·s to 10 mPa·s and more preferably 1 mPa·s to 5 mPa·s. The viscosity is a value measured at 25°C using a viscometer. The viscosity of the pretreatment liquid is measured by the same method as in the viscosity of the ink.

The surface tension of the pretreatment liquid is preferably 60 mN/m or less, more preferably in a range of 20 mN/m to 50 mN/m, and still more preferably in a range of 30 mN/m to 45 mN/m. The surface tension is a value measured at a temperature of 25°C. The surface tension of the pretreatment liquid is measured by the same method as in the surface tension of the ink.

(Method of Applying Pretreatment Liquid)

A method of applying the pretreatment liquid is not particularly limited, and examples thereof include known methods such as a coating method, a dipping method, and an ink jet recording method.

Examples of the coating method include known methods using a bar coater, an extrusion die coater, an air doctor coater, a blade coater, a rod coater, a knife coater, a squeeze coater, a reverse roll coater, or the like.

It is preferable that the pretreatment liquid is applied by a coating method.

The image recording method according to the present disclosure may include a step of drying the pretreatment liquid applied onto the substrate after the pretreatment liquid applying step.

The step of applying the pretreatment liquid may include drying the pretreatment liquid applied onto the non-permeable substrate.

A method of drying the pretreatment liquid is not particularly limited, but for example, the same method as the method exemplified in the method of drying the ink, which will be described later, can be applied.

A preferred range of drying conditions (for example, the heating temperature and the heating time) of the pretreatment liquid is the same as a preferred range of drying conditions of the ink, which will be described later.

<Step of applying first ink>

The image recording method of the present disclosure includes a step of applying, by an ink jet recording method, a first ink containing water, a first pigment, and a resin onto a region of the non-permeable substrate, onto which the pretreatment liquid has been applied.

(First ink)

The first ink contains water, a first pigment, and a resin.

-Water-

The first ink contains water.

The content of the water is preferably 10% by mass or more, more preferably 20% by mass or more, still more preferably 30% by mass or more, and particularly preferably 50% by mass or more with respect to the total amount of the first ink.

The upper limit of the content of water is appropriately determined according to the content of other components, and is, for example, 99% by mass, preferably 95% by mass, and more preferably 90% by mass with respect to the total amount of the first ink.

- First pigment -

The first ink contains at least one first pigment.

A commercially available organic pigment or inorganic pigment may be used as the first pigment.

Examples of the first pigment include pigments described in "Encyclopedia of Pigments" edited by Seishiro Ito (2000), "Industrial Organic Pigments", W. Herbst, K. Hunger, JP2002-12607A, JP2002-188025A, JP2003-26978A, and JP2003-342503A.

In addition, the first pigment may be a water-insoluble pigment which can be dispersed in water by a dispersing agent, or may be a self-dispersing pigment.

The self-dispersing pigment is a pigment that can be dispersed in water without using a dispersing agent.

The self-dispersing pigment is, for example, a compound in which at least one selected from the group consisting of a hydrophilic group such as a carbonyl group, a hydroxyl group, a carboxyl group, a sulfo group, and a phosphoric acid group and salts thereof is chemically bonded to a surface of the pigment directly or through another group.

The first pigment may be a chromatic color (for example, cyan, magenta, yellow, and the like) pigment or an achromatic color (for example, white and black) pigment.

From the viewpoints of the image density and the jettability, the content of the first pigment is preferably in a range of 1% by mass to 25% by mass, more preferably in a range of 2% by mass to 25% by mass, and still more preferably in a range of 3% by mass to 20% by mass with respect to the total amount of the ink.

-Resin-

The first ink contains at least one resin.

The resin in the first ink contributes to film forming property of the ink, that is, formability of the ink film.

A weight-average molecular weight (Mw) of the resin is preferably 1,000 to 300,000, more preferably 2,000 to 200,000, and still more preferably 5,000 to 100,000.

In the present disclosure, the weight-average molecular weight (Mw) means a value measured according to gel permeation chromatography (GPC), unless otherwise specified.

For the measurement by gel permeation chromatography (GPC), HLC (registered trademark)-8020GPC (manufactured by Tosoh Corporation) is used as a measuring device, three columns of TSKgel (registered trademark) Super Multipore HZ-H (4.6 mmID x 15 cm, manufactured by Tosoh Corporation) are used as a column, and tetrahydrofuran (THF) is used as an eluant. In addition, as the measurement conditions, a sample concentration of 0.45% by mass, a flow rate of 0.35 ml/min, a sample injection amount of 10 μl, and a measurement temperature of 40°C are set, and a RI detector is used.

The calibration curve is created from eight samples of "Standard sample TSK standard, polystyrene" manufactured by Tosoh Corporation: "F-40", "F-20", "F-4", "F-1", "A-5000", "A-2500", "A-1000", and "n-propylbenzene".

Examples of the resin include a pigment dispersing resin as a dispersing agent.

Examples of the resin also include resin particles.

The first ink may contain at least one pigment dispersing resin.

The pigment dispersing resin is a resin having a function of dispersing a pigment.

The pigment dispersing resin may be a random copolymer or a block copolymer.

The pigment dispersing resin may have a crosslinking structure.

The first ink may be prepared using a pigment dispersion liquid containing a pigment and a pigment dispersing resin.

As the pigment dispersing resin, for example, known polymer dispersing agents, such as polymer dispersing agents described in paragraphs 0029 to 0106 of WO2021/221069A, can be used.

In a case where the first ink contains the pigment dispersing resin, a ratio of a content of the pigment and a content of the pigment dispersing resin in the first ink is preferably 1:0.04 to 1:3, more preferably 1:0.05 to 1:1, and still more preferably 1:0.05 to 1:0.5 on a mass basis.

In a case where the first ink contains the pigment dispersing resin, the content of the pigment dispersing resin is preferably 0.1% by mass to 10% by mass, more preferably 0.3% by mass to 5% by mass, and still more preferably 0.5% by mass to 2.5% by mass with respect to the total amount of the first ink.

The first ink may contain at least one kind of resin particles.

A resin constituting the resin particles is preferably a water-insoluble resin. The "water-insoluble" in the water-insoluble resin means a property that an amount dissolved in 100 g of distilled water at 25°C is less than 2 g.

A volume average particle diameter of the resin particles is preferably 1 nm to 300 nm, more preferably 3 nm to 200 nm, and still more preferably 5 nm to 150 nm.

In the present disclosure, the volume average particle diameter means a value measured using a laser diffraction/scattering type particle size distribution analyzer.

As the measuring device, a particle size distribution measuring device "MICROTRAC MT-3300II" (manufactured by Nikkiso Co., Ltd.) is exemplified.

It is preferable that the resin particles are at least one selected from the group consisting of acrylic resin particles, ester resin particles, a mixture of acrylic resin particles and ester resin particles, composite particles containing an acrylic resin and an ester resin, styrene-acrylic resin particles, and polyurethane resin particles.

In the present disclosure, the acrylic resin means a polymer (homopolymer or copolymer) of a raw monomer including at least one selected from the group consisting of acrylic acid, a derivative of acrylic acid (for example, acrylic acid ester and the like), methacrylic acid, and a derivative of methacrylic acid (for example, methacrylic acid ester and the like).

From the viewpoint of further improving rub resistance of the image, a glass transition temperature (Tg) of the resin particles is preferably 50°C to 250°C and more preferably 50°C to 150°C.

Here, a measurement Tg obtained by actual measurement is applied as the glass transition temperature (Tg) of the resin particles. A method for measuring the measurement Tg can refer to paragraph 0111 of JP2015-25076A.

For the resin particles, for example, descriptions described in paragraphs 0038 to 0114 of WO2021/192720A and paragraphs 0109 to 0120 of JP2015-25076A may be referred to.

In a case where the first ink contains the resin particles, a content of the resin particles in the first ink is preferably 1% by mass to 20% by mass, more preferably 2% by mass to 15% by mass, and still more preferably 2% by mass to 10% by mass with respect to the total amount of the first ink.

-Water-Soluble Organic Solvent-

It is preferable that the first ink contains at least one water-soluble organic solvent.

In this manner, jetting stability from the ink jet head is ensured.

The water-soluble organic solvent contained in the first ink may be used alone or in combination of two or more kinds thereof.

In the present disclosure, "water-soluble" in the "water-soluble organic solvent" means a property of being dissolved in 1 g or more in 100 g of water at 25°C.

The type of the water-soluble organic solvent which can be contained in the first ink is not particularly limited, and examples thereof include:

a monoalcohol having 1 to 4 carbon atoms;
a diol such as 1,3-propanediol, 1,3-butanediol, 1,4-butanediol, 2-butene-1,4-diol, 2-ethyl-1,3-hexanediol, 2-methyl-2,4-pentanediol, 1,2-octanediol, 1,2-hexanediol, 1,2-pentanediol, or 4-methyl-1,2-pentanediol;
triols such as glycerin, 1,2,6-hexanetriol, and trimethylolpropane;
alkylene glycols such as ethylene glycol and propylene glycol;
alkylene glycol monoalkyl ethers such as ethylene glycol monoalkyl ether and propylene glycol monoalkyl ether;
polyalkylene glycol such as diethylene glycol, triethylene glycol, tetraethylene glycol, pentaethylene glycol, dipropylene glycol, or polyoxyethylene polyoxypropylene glycol;
polyalkylene glycol ether such as diethylene glycol monoalkyl ether, triethylene glycol monoalkyl ether, tripropylene glycol monoalkyl ether, or polyoxypropylene glyceryl ether;
2-pyrrolidone, and N-methyl-2-pyrrolidone;
and the like.

From the viewpoint of the jetting stability, it is preferable that the water-soluble organic solvent in the first ink includes at least one selected from the group consisting of alkylene glycol and alkylene glycol monoalkyl ether.

A content of the water-soluble organic solvent is preferably 10% by mass to 40% by mass and more preferably 15% by mass to 30% by mass with respect to the total amount of the first ink.

-Additive-

The first ink may contain an additive such as a surfactant, a water-soluble resin, a co-sensitizer, an ultraviolet absorbing agent, an antioxidant, a fading inhibitor, a conductive salt, and a basic compound, as necessary.

-Physical Properties-

From the viewpoint of improving the jetting stability, a pH (25°C) of the first ink is preferably 7 to 10 and more preferably 7.5 to 9.5.

The pH of the ink is measured at 25°C using a pH meter, for example, a pH meter (product name "WM-50EG") manufactured by DKK-TOA CORPORATION.

A viscosity (25°C) of the first ink is preferably 0.5 mPa·s to 30 mPa·s, more preferably 2 mPa·s to 20 mPa·s, preferably 2 mPa·s to 15 mPa·s, and stll more preferably 3 mPa·s to 10 mPa·s.

The viscosity of the first ink is measured at 25°C using a viscometer, for example, a TV-22 type viscometer manufactured by TOKI-SANGYO CO., LTD.

The surface tension of the first ink is preferably 60 mN/m or less, more preferably in a range of 20 mN/m to 50 mN/m, and still more preferably in a range of 25 mN/m to 40 mN/m.

The surface tension of the first ink is measured at 25°C using a surface tension meter, for example, by a plate method using an automatic surface tension meter (trade name, "CBVP-Z") manufactured by Kyowa Interface Science Co., Ltd.

(Method of applying first ink)

In the step of applying the first ink, the first ink is applied, by an ink jet recording method, onto the region of the non-permeable substrate onto which the pretreatment liquid has been applied.

The ejection method of the ink by the ink jet recording method is not particularly limited, and for example, any known methods such as an electric charge control method of jetting the ink using electrostatic attraction force, a drop-on-demand method (pressure pulse method) using vibration pressure of a piezoelectric element, an acoustic ink jet method of converting an electric signal into an acoustic beam, irradiating the ink with the acoustic beam, and jetting the ink by using radiation pressure, a thermal ink jet method (BUBBLE JET (registered trademark)) of heating the ink, forming air bubbles, and using generated pressure, and the like may be used.

As the ink jet recording method, particularly, it is possible to effectively use the method described in JP1979-59936A (JP-S54-59936A), which is an ink jet recording method of causing an ink to experience a rapid volume change by the action of thermal energy and jetting the ink from a nozzle by using the acting force resulting from the change of state. As the ink jet recording method, a method described in paragraphs 0093 to 0105 of JP2003-306623A can also be applied.

The application of the first ink onto the non-permeable substrate using the ink jet recording method is performed by jetting the first ink from a nozzle of an ink jet head.

The method of using the ink jet head also includes a shuttle method (multi-pass method) of performing recording while a short serial head is allowed to scan in the width direction of the recorded medium, and a line method (single-pass method) of using a line head in which recording elements are aligned correspondingly to the entire range of one side of the recorded medium.

In the line method, image recording can be performed on the entire surface of the recorded medium by scanning the recorded medium in a direction intersecting the direction in which the recording elements are aligned. In the line method, a transport system such as a carriage that allows the short head to perform scanning in the shuttle method is unnecessary. In addition, in the line method, as compared with the shuttle method, a carriage is not required to move, and a complicated scanning control with the recorded medium is unnecessary, and only the recorded medium moves. Therefore, according to the line method, an increase in the recording speed of an image is achieved as compared with the shuttle method.

The first ink is preferably applied using an ink jet head having a resolution of 300 dpi or more (more preferably 600 dpi or more and still more preferably 800 dpi or more). Here, dpi is an abbreviation for dot per inch, and 1 inch is 2.54 cm.

In addition, the preferred range of the volume (V1; pL) of the liquid droplet of the first ink during the jetting of the first ink is as described above.

The step of applying the first ink may include heating and drying the first ink applied to the region of the non-permeable substrate to which the pretreatment liquid has been applied, or may not include heating and drying the first ink.

In a case where the first ink is heated and dried, a method for heating and drying the ink is not particularly limited, and examples thereof include infrared (IR) drying, hot air drying (for example, a dryer and the like), and heating and drying with a heating device (for example, a heater, a hot plate, a heating furnace, and the like).

The method of heating and drying may be a method of combining two or more of the above-described methods.

The heating and drying can be carried out by heating the first ink from at least one of the image-recorded surface side or the image non-recorded surface side of the substrate.

In a case where the first ink is heated and dried, a heating temperature in the heating and drying of the first ink is preferably 35°C or higher, more preferably 40°C or higher, still more preferably 50°C or higher, and even more preferably 60°C or higher.

The upper limit value of the heating temperature is not particularly limited, but is preferably 100°C and more preferably 90°C.

In a case where the first ink is heated and dried, a heating time in the heating and drying of the first ink is not particularly limited, but is preferably 1 second to 180 seconds, more preferably 1 second to 120 seconds, and still more preferably 1 second to 60 seconds.

<Step of applying second ink>

The image recording method of the present disclosure includes a step of applying, by an ink jet recording method, a second ink containing water, a second pigment, and a resin onto a region of the non-permeable substrate onto which the pretreatment liquid and the first ink have been applied.

By this step, a multicolor image having a structure in which the image derived from the second ink is superimposed on the image derived from the first ink is formed.

By having each of the above-described steps, bleeding and the burying of dots of the second ink are suppressed in the multicolor image.

(Second ink)

The second ink contains water, a second pigment, and a resin.

Specific examples of the second pigment contained in the second ink are the same as the specific examples of the first pigment contained in the first ink.

However, it is preferable that the second pigment contained in the second ink has a different hue from the first pigment contained in the first ink.

In this manner, the effect of suppressing bleeding and the effect of suppressing dot embedding of the second ink are more easily visually recognized.

The preferred aspect of the second ink is the same as the preferred aspect of the first ink except that the pigments are different.

The preferred aspect of the method of applying the second ink is also the same as the preferred aspect of the method of applying the first ink.

<Step of applying third ink>

The image recording method of the present disclosure may include a step of applying a third ink containing water, a third pigment, and a resin onto a region of the non-permeable substrate onto which the pretreatment liquid, the first ink, and the second ink have been applied.

Specific examples of the third pigment contained in the third ink are the same as the specific examples of the first pigment contained in the first ink.

However, it is preferable that the third pigment contained in the third ink has a different hue from both the first pigment contained in the first ink and the second pigment contained in the second ink.

The preferred aspect of the third ink is the same as the preferred aspect of the first ink except that the pigments are different.

The preferred aspect of the method of applying the third ink is also the same as the preferred aspect of the method of applying the first ink.

In a case where an acid value (mgKOH/g) of the third ink is denoted by Av3, it is preferable that an inequality "Av1 > Av2 > Av3" is satisfied.

As a result, the graininess of the multicolor image is further improved. That is, the periodic unevenness of the multicolor image is further suppressed.

<Step of applying fourth ink>

The image recording method of the present disclosure may include a step of applying, by an ink jet recording method, a third ink containing water, a third pigment, and a resin to a region on the non-permeable substrate, onto which the pretreatment liquid, the first ink, and the second ink have been applied, and a step of applying, by an ink jet recording method, a fourth ink containing water, a fourth pigment, and a resin to a region on the non-permeable substrate, onto which the pretreatment liquid, the first ink, the second ink, and the third ink have been applied.

The step of applying the third ink is as described above.

Specific examples of the fourth pigment contained in the fourth ink are the same as the specific examples of the first pigment contained in the first ink.

However, it is preferable that the fourth pigment contained in the fourth ink has a different hue from any of the first pigment contained in the first ink, the second pigment contained in the second ink, and the third pigment contained in the third ink.

The preferred aspect of the fourth ink is the same as the preferred aspect of the first ink except that the pigments are different.

The preferred aspect of the method of applying the fourth ink is also the same as the preferred aspect of the method of applying the first ink.

In the image recording method of the present disclosure in an aspect including the step of applying the third ink and the step of applying the fourth ink, it is preferable that, in a case where an acid value (mgKOH/g) of the third ink is represented by Av3 and an acid value (mgKOH/g) of the fourth ink is represented by Av4, a relationship of Inequality (4) is satisfied.

$$Av1 > Av2 > Av3 > Av4 \ ... \ \text{Inequality (4)}.$$

As a result, the graininess of the multicolor image is further improved. That is, the periodic unevenness of the multicolor image is further suppressed.

<Step of applying white ink>

In the image recording method of the present disclosure, in a case where neither the first ink nor the second ink is a white ink, the image recording method of the present disclosure may include a step of applying, by an ink jet recording method, a white ink containing water, a white pigment, and a resin onto at least a region of the non-permeable substrate onto which the pretreatment liquid, the first ink, and the second ink have been applied.
In this manner, the multicolor image derived from at least the first ink and the second ink can be concealed (that is, covered) by the white image derived from the white ink.

(White pigment)

Examples of the white pigment include titanium dioxide, barium sulfate, calcium carbonate, silica, zinc oxide, zinc sulfide, mica, talc, and pearl.
From the viewpoint of covering properties, an average primary particle diameter of the white pigment is preferably 150 nm or more, and more preferably 200 nm or more. In addition, from the viewpoint of jettability of the ink, the average primary particle diameter of the white pigment is preferably 400 nm or less, and more preferably 350 nm or less. The average primary particle diameter of the white pigment is preferably 150 nm to 400 nm.
In the present disclosure, the average primary particle diameter of the white pigment is a value measured using a transmission electron microscope (TEM). Specifically, the average primary particle diameter of the white pigment is a value determined by selecting 50 optional particles of the white pigment present in a visual field observed by the TEM, measuring primary particle diameters of the 50 particles, and averaging the measured diameters. As the transmission electron microscope, a transmission electron microscope 1200EX manufactured by JEOL Ltd. can be used.
The white pigment may be hollow particles. The hollow particles are particles having a void inside. Due to the difference in refractive index between the outer shell and the void of the hollow particles, in a case where the ink contains the hollow particles, an ink exhibiting white color is obtained.
Examples of the hollow particles include hollow resin particles and inorganic hollow particles.
Examples of the resin constituting the hollow resin particles include an acrylic resin, a styrene-acrylic resin, a crosslinked styrene-acrylic resin, a urethane resin, and a maleic acid-based copolymer.
Examples of the inorganic material constituting the inorganic hollow particles include silica, alumina, titania, and zinc oxide.
Among these, the white coloring pigment preferably includes at least one selected from the group consisting of titanium dioxide and hollow particles.

(Acid value of white ink)

The acid value of the white ink is preferably higher than the acid values of other inks (for example, at least the first ink and the second ink).
As a result, the unevenness of the white image can be further suppressed.
For example, in a case where the image recording method of the present disclosure includes a step of applying a first ink, a step of applying a second ink, a step of applying a third ink, and a step of applying a fourth ink, and further includes a step of applying, by an ink jet recording method, a white ink onto a region of the non-permeable substrate, onto which the pretreatment liquid, the first ink, the second ink, the third ink, and the fourth ink have been applied, it is preferable that the acid value (mgKOH/g) of the white ink is higher than any of Av1, Av2, Av3, and Av4.
As a result, the unevenness of the white image can be further suppressed.

[image recording apparatus]

An image recording apparatus according to the present disclosure is used in the image recording method according to the present disclosure, and includes: a pretreatment liquid applying device that applies the pretreatment liquid onto one surface of the non-permeable substrate; a first ink jet head that applies the first ink; a second ink jet head that applies the second ink; and the value (1) is 28.0 to 35.0, and the value (2) is -200 to 200.

<Example of Image Recording Apparatus>

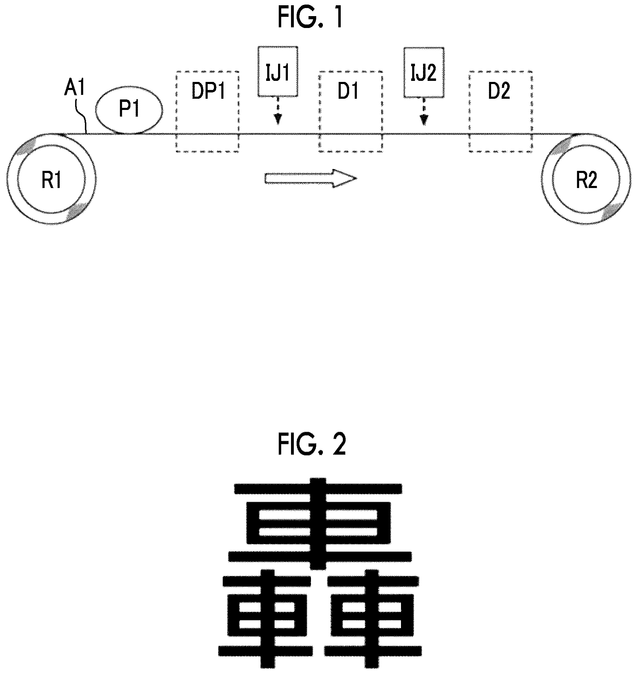

Fig. 1 is a diagram conceptually showing an example of an image recording apparatus used in an image recording method of the present disclosure.

As shown in Fig. 1, one embodiment of the image recording apparatus is an example of an ink jet recording device including a transport mechanism which transports a resin substrate by a roll-to-roll method; and is a device that unwinds a non-permeable substrate A1 having a long film shape wound in a roll shape by a unwinding device R1, transports the unwound non-permeable substrate A1 in a direction indicated by a block arrow, passes the unwound non-permeable substrate A1 through a pretreatment liquid applying device P1, a pretreatment liquid drying zone DP1, a first ink jet head IJ1, a first drying zone D1, a second ink jet head IJ2, and a second drying zone D2 in this order, and finally winds the non-permeable substrate A1 by a winding device R2 including a winding core with a tension P.

The non-permeable substrate A1 is transported in a state in which a tension is applied, and is wound in a state in which the tension P is applied. The tension during the transport may be the same tension as the tension P during the winding, or may be a tension different from the tension P. In addition, the tension may vary depending on the position in the transport direction, or may be uniform.

The image recording apparatus according to one embodiment may include a tension adjusting unit for adjusting the tension of the non-permeable substrate.

Examples of the tension adjusting unit include

a powder brake provided in the unwinding device R1 and/or the winding device R2,
a dancer roll provided in the middle of the transport path, and
a control device (for example, a tension controller) that controls each tension by adjusting each condition of the image recording apparatus.

In addition, the image recording apparatus according to one embodiment may include a tension measuring unit (for example, a tension meter) for measuring the tension of the non-permeable substrate.

Since Fig. 1 is a conceptual diagram, the transport path of the non-permeable substrate A1 is simplified, and the non-permeable substrate A1 is shown as being transported in one direction. However, in reality, the transport path of the non-permeable substrate A1 may be meandering.

The method of transporting the non-permeable substrate A1 can be appropriately selected from various web transport methods of using a drum, a roll, and the like.

The pretreatment liquid applying device P1, the pretreatment liquid drying zone DP1, the first ink jet head IJ1, the first drying zone D1, the second ink jet head IJ2, and the second drying zone D2 are arranged in this order on a downstream side of the non-permeable substrate A1 in the transport direction and from an upstream side of the non-permeable substrate A1 in the transport direction with respect to the unwinding device R1 for unwinding the non-permeable substrate A1.

The pretreatment liquid, the first ink, and the second ink are respectively applied by the pretreatment liquid applying device P1, the first ink jet head IJ1, and the second ink jet head IJ2.

In this case, at least one of the heating and drying of the pretreatment liquid in the pretreatment liquid drying zone DP1, the heating and drying of the first ink in the first drying zone D1, or the heating and drying of the second ink in the second drying zone D2 can be performed.

In the first drying zone D1, the heating and drying of the pretreatment liquid may be substantially performed in addition to the heating and drying of the first ink.

In the second drying zone D2, the heating and drying of the pretreatment liquid and/or the heating and drying of the first ink may be substantially performed in addition to the heating and drying of the second ink.

Further, in a case where the resin substrate passes through each drying zone in a state where the temperature of each drying zone is set to room temperature, the heating and drying can be omitted.

In an embodiment, the first ink is any one of a non-white ink containing water and a colorant for recording a non-white image or a white ink containing water and a colorant for recording a white image, and the second ink is the other of the non-white ink and the white ink.

A surface treatment unit (not shown) for performing a surface treatment (preferably a corona treatment) on at least one of the front surface or the back surface of the non-permeable substrate A1 may be provided on the upstream side of the pretreatment liquid applying device P1.

Further, a cooling zone for cooling the recorded multicolor image (that is, the multicolor image including the white image and the non-white image) may be provided downstream of the second drying zone D2.

The first ink jet head IJ1 and the second ink jet head IJ2 may be shuttle heads, but from the viewpoint of increasing the speed of image recording, a line head in which a plurality of jetting ports (nozzles) are arranged on the non-permeable substrate A1 having a long film shape in the width direction is preferable.

Each of the first ink jet head IJ1 and the second ink jet head IJ2 may be used alone or a plurality of kinds thereof.

Examples of a combination of the first ink jet head IJ1 and the second ink jet head IJ2 include a combination in which the first ink jet head IJ1 is formed of four ink jet heads corresponding to four colors of cyan, magenta, yellow, and black (note; these four ink jet heads are arranged in the transport direction of the resin substrate) and the second ink jet head IJ2 is formed of one ink jet head corresponding to white (that is, white).

Further, other examples of the combination of the first ink jet head IJ1 and the second ink jet head IJ2 include a combination in which the first ink jet head IJ1 is formed of one ink jet head corresponding to white and the second ink jet head IJ2 is formed of four ink jet heads corresponding to four colors of cyan, magenta, yellow, and black (note; these four ink jet heads are arranged in the transport direction of the substrate).

In the ink jet recording using the image recording apparatus according to the one embodiment, first, the non-permeable substrate A1 having a long film shape wound in a roll shape is unwound by the unwinding device R1, the unwound non-permeable substrate A1 is transported in a direction of a block arrow in a state where a tension is applied, the pretreatment liquid is applied onto the transported non-permeable substrate A1 by the pretreatment liquid applying device P1, next, the pretreatment liquid is dried in the pretreatment liquid drying zone DP1 as necessary, next, the first ink (that is, any one of the non-white ink or the white ink) is applied by the first ink jet head IJ1, next, the first ink is dried in the first drying zone D1 as necessary, next, the second ink (that is, the other of the non-white ink or the white ink) is applied by the second ink jet head IJ2, and next, the second ink is dried in the second drying zone D2 as necessary.

As a result, a multicolor image including the first image (that is, any one of the non-white image or the white image) derived from the first ink and the second image (that is, the other of the non-white image or the white image) derived from the second ink is obtained.

Next, the obtained multicolor image is cooled as necessary, and finally, the non-permeable substrate A1 with the multicolor image in a state where the tension P is applied is wound by the winding device R2 including the winding core.

The image recording apparatus according to the embodiment may include other ink jet heads (for example, a third ink jet head for a third ink, a fourth ink jet head for a fourth ink, an ink jet head for a white ink, and the like) on the downstream side of the second ink jet head IJ2 and upstream side of the second drying zone D2, as necessary.

Examples

Hereinafter, examples of the present disclosure will be shown, but the present disclosure is not limited to the following examples.

[Examples 1 to 18 and Comparative Examples 1 and 4]

<Preparation of Pretreatment Liquid>

The following components were mixed to prepare a pretreatment liquid having the following formulation.

-Composition of Pretreatment Liquid-

· Calcium acetate [aggregating agent] ... 0.2% by mass
· Calcium formate [aggregating agent] ... 1.7% by mass
· Calcium lactate [aggregating agent] ... 2.2% by mass
· Propylene glycol [solvent] ... 2.0% by mass
· OLFINE E1010 (manufactured by Nissin Chemical Industry Co., Ltd.) [surfactant] 0.5% by mass
· SUPERFLEX 500M (manufactured by DKS Co., Ltd.) [aqueous dispersion of urethane resin particles]:
... 9.3% by mass
· Ultrapure water
... remaining amount set such that total amount of pretreatment liquid reached 100% by mass

<Preparation of black ink K1>

The following components were mixed to prepare a black ink K1.
The black ink K1 was used as the first ink or the second ink.
Details of whether the black ink K1 and each ink described below were used as the first ink or the second ink are shown in Tables 1 and 2 below.

- Composition of black ink K1 -

· APD4000 Black (manufactured by Fujifilm Imaging Colorants Ltd.): ... 3.2% by mass in terms of content of pigment

· Propylene glycol monomethyl ether (PGmME) [water-soluble organic solvent] ... 3% by mass
· Propylene glycol (PG) [water-soluble organic solvent] ... 20% by mass
· Neocryl A-1091 (manufactured by DSM) [styrene acrylic resin particle dispersion liquid] ... 5.0% by mass in terms of content of the styrene-acrylic resin particles
· OLFINE E1010 (manufactured by Nissin Chemical Industry Co., Ltd.) [acetylene glycol-based surfactant] ... 2.2% by mass
· BYK345 (manufactured by BYK-Chemie GmbH) [silicone-based surfactant]... 0.2 mass%
PVPK15 (manufactured by Tokyo Chemical Industry Co., Ltd.) (polyvinylpyrrolidone K15) ... 0.15% by mass
· ST-XS (manufactured by Nissan Chemical Corporation) [colloidal silica dispersion liquid] ... 0.05% by mass in terms of content of colloidal silica particles
· Water
... remaining amount such that total amount of ink reached 100% by mass

<Preparation of black ink K2>

A black ink K2 was prepared in the same manner as in the preparation of the black ink K1, except that in the preparation of the black ink K1, "Neocryl A-1091 (manufactured by DSM Co., Ltd.) [styrene acrylic resin particle dispersion liquid] ... 5.0% by mass of content of styrene acrylic resin particles" was changed to "NeoRez R940 (manufactured by Kusumoto Chemicals, Ltd.) [urethane resin particle dispersion liquid] ... 8.4% by mass of content of urethane resin particles".
The black ink K1 was used as the first ink or the second ink (for details, see Tables 1 and 2).

<Preparation of black inks K3 to K5 (comparative examples)>

Black inks K3 to K5 used in Comparative Examples were prepared in the same manner as in the preparation of the black ink K1, except that in the preparation of the black ink K1, the amount of OLFINE E1010 and the amount of BYK 345 were changed so that cosθ described later was changed to the value shown in Table 1.
In K3, the amount of OLFINE E1010 was set to 1.9% by mass, and the amount of BYK 345 was set to 0.3% by mass.
In K4, the amount of OLFINE E1010 was set to 0.1% by mass, and BYK 345 was not used.
In K5, the amount of OLFINE E1010 was set to 1.5% by mass, and the amount of BYK 345 was set to 0.7% by mass.
The black inks K3 to K5 were used as the first ink. For details, see Table 2.

<Preparation of Cyan Ink C1>

The following components were mixed to prepare a cyan ink C1.
The cyan ink C1 was used as the first ink or the second ink (for details, see Tables 1 and 2).

-Composition of Cyan Ink C1-

· APD4000 Cyan (manufactured by Fujifilm Imaging Colorants Ltd.) [cyan pigment dispersion liquid]:
... 3.1% by mass in terms of content of cyan pigment
· Propylene glycol monomethyl ether (PGmME) [water-soluble organic solvent] ... 3% by mass
· Propylene glycol (PG) [water-soluble organic solvent] ... 20% by mass
· Neocryl A-1091 (manufactured by DSM) [styrene acrylic resin particle dispersion liquid] ... 5.5% by mass in terms of content of resin particles
· OLFINE E1010 (manufactured by Nissin Chemical Industry Co., Ltd.) [acetylene glycol-based surfactant] ... 1.7% by mass
· BYK345 (manufactured by BYK-Chemie GmbH) [silicone-based surfactant]... 0.2 mass%
PVPK15 (manufactured by Tokyo Chemical Industry Co., Ltd.) [polyvinylpyrrolidone K15] ... 0.15% by mass
· ST-XS (manufactured by Nissan Chemical Corporation) [colloidal silica dispersion liquid] ... 0.05% by mass in terms of content of colloidal silica particles
· Water
... remaining amount such that total amount of ink reached 100% by mass

<Preparation of Cyan Ink C2>

A cyan ink C2 was prepared in the same manner as in the preparation of the cyan ink C1, except that the acid value was changed by changing the following points in the preparation of the cyan ink C1.

The cyan ink C1 was used as the second ink (for details, see Tables 1 and 2).

-Changes from cyan ink C1-

"Neocryl A-1091 (manufactured by DSM) [styrene acrylic resin particle dispersion liquid] 5.5% by mass" was changed to "Neocryl A-1120 (manufactured by DSM) [styrene acrylic resin particle dispersion liquid] 5.5% by mass".

<Preparation of Magenta Ink M1>

The following components were mixed to prepare a magenta ink M1.

The magenta ink M1 was used as the second ink or the third ink (for details, see Tables 1 and 2).

- Composition of magenta ink M1 -

· APD4000 Magenta (manufactured by Fujifilm Imaging Colorants Ltd.) ... 5.7% by mass in terms of content of pigment
· Propylene glycol monomethyl ether (PGmME) [water-soluble organic solvent] ... 3% by mass
· Propylene glycol (PG) [water-soluble organic solvent] ... 20% by mass
· Neocryl A-1091 (manufactured by DSM) [styrene acrylic resin particle dispersion liquid] ... 3.4% by mass in terms of content of resin particles
· OLFINE E1010 (manufactured by Nissin Chemical Industry Co., Ltd.) [acetylene glycol-based surfactant] 2.1% by mass
· BYK345 (manufactured by BYK-Chemie GmbH) [silicone-based surfactant]... 0.2 mass%
PVPK15 (manufactured by Tokyo Chemical Industry Co., Ltd.) [polyvinylpyrrolidone K15] ... 0.15% by mass
· ST-XS (manufactured by Nissan Chemical Corporation) [colloidal silica dispersion liquid] ... 0.05% by mass in terms of content of colloidal silica particles
· Water
... remaining amount such that total amount of ink reached 100% by mass

<Preparation of Yellow Ink Y1>

The following components were mixed to prepare a yellow ink Y1.
The yellow ink Y1 was used as the second ink or the fourth ink (for details, see Tables 1 and 2).

- Composition of yellow ink Y1 -

· APD4000 Yellow (manufactured by Fujifilm Imaging Colorants Ltd.) ... 3.9% by mass in terms of content of pigment
· Propylene glycol monomethyl ether (PGmME) [water-soluble organic solvent] ... 3% by mass
· Propylene glycol (PG) [water-soluble organic solvent] ... 20% by mass
· Neocryl A-1091 (manufactured by DSM) [styrene acrylic resin particle dispersion liquid] ... 6.0% by mass in terms of content of resin particles
· OLFINE E1010 (manufactured by Nissin Chemical Industry Co., Ltd.) [acetylene glycol-based surfactant] ... 1.9% by mass
· BYK349 (manufactured by BYK-Chemie GmbH) [silicone-based surfactant]... 0.2 mass%
PVPK15 (manufactured by Tokyo Chemical Industry Co., Ltd.) [polyvinylpyrrolidone K15] ... 0.15% by mass
· ST-XS (manufactured by Nissan Chemical Corporation) [colloidal silica dispersion liquid] ... 0.05% by mass in terms of content of colloidal silica particles
· Water
... remaining amount such that total amount of ink reached 100% by mass

<Preparation of Yellow Ink Y2>

A yellow ink Y2 was prepared in the same manner as in the preparation of the yellow ink Y1, except that the acid value was changed by changing the following points in the preparation of the yellow ink Y1.

The yellow ink Y2 was used as the second ink (for details, see Tables 1 and 2).

-Changes from Yellow ink Y1-

"Neocryl A-1091 (manufactured by DSM) [styrene acrylic resin particle dispersion liquid] 6.0% by mass" was changed to "Neocryl A-6075 (manufactured by DSM) [styrene acrylic resin particle dispersion liquid] 6.0% by mass".

<Preparation of Yellow Ink Y3>

A yellow ink Y3 was prepared in the same manner as in the preparation of the yellow ink Y1, except that the acid value was changed by changing the following points in the preparation of the yellow ink Y1.
The yellow ink Y3 was used as the fourth ink.

-Changes from Yellow ink Y1-

"Neocryl A-1091 (manufactured by DSM) [styrene acrylic resin particle dispersion liquid] 6.0% by mass" was changed to "Neocryl A-6075 (manufactured by DSM) [styrene acrylic resin particle dispersion liquid] 5.0% by mass".

<Preparation of White Ink W1>

A white ink W1 was prepared as follows.

(Synthesis of pigment dispersing agent (block polymer) for white pigment dispersion liquid)

A block polymer 1 was synthesized as a pigment dispersing agent for a low acid value white pigment dispersion liquid with reference to Synthesis Example 8 of JP2015-83688A. The details are described below.
Diethylene glycol dimethyl ether (266 parts by mass; polymerization solvent), 2-iodo-2-cyanopropane (6.2 parts by mass; polymerization initiation compound), methyl methacrylate (MMA) (120 parts by mass; monomer), acrylic acid (AA) (28.8 parts by mass; monomer), cyclohexyl methacrylate (CHMA) (67.2 parts by mass; monomer), azobismethyl isovaleronitrile (7.9 parts by mass), and 2-t-butyl-4,6-dimethylphenol (0.7 parts by mass; catalyst) were added to a reactor of a 1 L separable flask equipped with a stirrer, a backflow condenser, a thermometer, and a nitrogen introduction pipe, and the mixture was stirred while flowing nitrogen.
Next, the temperature (reaction temperature) of the mixture in the reactor was increased to 70°C, and the mixture was polymerized for 3 hours, thereby obtaining a polymerization solution A containing an MMA/AA/CHMA copolymer.
After 3 hours, as a result of sampling a part of the polymerization solution A and measuring the solid content, the solid content was 42.0% by mass, and thus it was confirmed that most of the monomers were polymerized.
Further, in a case where the molecular weight of the MMA/AA/CHMA copolymer was measured by GPC, the weight-average molecular weight (Mn) was 7,500.
The acid value of this MMA/AA/CHMA copolymer was 101.0 mgKOH/g.
Next, a mixture of benzyl methacrylate (BzMA) (35.2 parts by mass; monomer) and V-65 (0.3 parts by mass; radical generator) was added to the polymerization solution A described above, and the mixture was polymerized at 70°C for 3 hours, thereby obtaining a polymerization solution B containing the block polymer 1 as a pigment dispersing agent for a low acid value white pigment dispersion liquid.
Here, the block polymer 1 is a block polymer containing an A block which is an MMA/AA/CHMA copolymer and a B block which is a BzMA homopolymer.
As a result of measurement of the solid content in the obtained polymerization solution B, the solid content thereof was 43.2% by mass and it was confirmed that most of the monomers were polymerized.
Further, the Mw of the block polymer 1 was 8,500, and the acid value thereof was 89.3 mgKOH/g.

(Preparation of white pigment dispersion liquid)

The block polymer 1 (136.4 parts by mass), butyl carbitol (163.6 parts by mass), and C.I. Pigment White 6 (trade name, "JR-405", manufactured by Tayca Co., Ltd., titanium dioxide particles) (450 parts by mass) as a white pigment were blended with each other and stirred with a disper. Next, the white pigment was sufficiently dispersed using a horizontal media disperser, thereby obtaining an oil-based pigment dispersion liquid. The average particle diameter of the white pigment dispersed in the oil-based pigment dispersion liquid was 290 nm. The viscosity of the oil-based pigment dispersion liquid was 86.3 m3Pa·s.

Next, a mixed solution consisting of potassium hydroxide (4.0 parts by mass) and water (341 parts by mass) was gradually added to the oil-based pigment dispersion liquid (700 parts by mass) while being stirred using a disperser, and the solution was neutralized. Thereafter, the white pigment was sufficiently dispersed using a horizontal media disperser, thereby obtaining a pigment dispersion liquid.

Next, ultrafiltration was performed by allowing ion exchange water to flow through the obtained pigment dispersion liquid at a flow rate of 600 mL per minute using an ultrafiltration device (cross-flow type ultrafilter (UF), manufactured by Sartorius AG). The liquid temperature of the filtrate was maintained at 25°C, and the ultrafiltration was performed ten times by setting one time the volume of the charged liquid to once. Ion exchange water was added thereto to obtain a low acid value white pigment dispersion liquid in which the concentration of the white pigment was 45% by mass and the concentration of the block polymer was 3.7% by mass.

(Preparation of white ink W1)

The following components were mixed to prepare a white ink W1.

- Composition of white ink W1 -

· The low-acid value white pigment dispersion liquid described above ... 12.5% by mass in terms of content of pigment
· Water-soluble organic solvent:

Propylene glycol monomethyl ether (PGmME) [water-soluble organic solvent] ... 3% by mass
Propylene glycol (PG) [water-soluble organic solvent] ... 20% by mass

· Neocryl A-1091 (manufactured by DSM) [styrene acrylic resin particle dispersion liquid] ... 7% by mass as the content of the resin particles
· OLFINE E1010 (manufactured by Nissin Chemical Industry Co., Ltd.) [acetylene glycol-based surfactant] ... 1.0% by mass
· BYK345 (manufactured by BYK-Chemie GmbH) [silicone-based surfactant] ... 0.7% by mass
· PVPK15 (manufactured by Tokyo Chemical Industry Co., Ltd.) [polyvinylpyrrolidone K15] ... 0.15% by mass
· ST-XS (manufactured by Nissan Chemical Corporation) [colloidal silica dispersion liquid] ... 0.05% by mass in terms of content of colloidal silica particles
· Water
... remaining amount such that total amount of ink reached 100% by mass

<Preparation of White Ink W2>

A white ink W2 was prepared in the same manner as in the preparation of the white ink W1, except that the acid value was changed by changing the following points in the preparation of the white ink W1.

-Changes from White Ink W1-

The amount of "Neocryl A-1091 (manufactured by DSM) [styrene acrylic resin particle dispersion liquid]" was changed from "7.0% by mass" to "6.0% by mass".

<Preparation of Image Recording Apparatus>

As an image recording apparatus used for evaluation, the image recording apparatus shown in Fig. 1 was prepared.

A gravure coater was used as the pretreatment liquid applying device P1.

The drying method in the pretreatment liquid drying zone DP1 was hot air drying.

As the first ink jet head IJ1, an ink jet head for jetting the first ink shown in Table 1 (for example, the black ink K1 in Example 1) was disposed, and as the second ink jet head IJ2, an ink jet head for jetting the second ink shown in Table 1 (for example, the cyan ink C1 in Example 1) was disposed.

The first drying zone D1 was allowed to pass through without stopping.

A drying method in the second drying zone D2 was drying with hot air.

An air cooling zone (not shown) was provided between the second drying zone D2 and the winding device R2.

As the first ink jet head IJ1 and the second ink jet head IJ2, a 1200 dpi (dot per inch; 1 inch is 2.54 cm)/20 inch-width piezo full line head (total number of nozzles: 2048) was used.

Driving frequencies of the first ink jet head IJ1 and the second ink jet head IJ2 were both set to 30 kHz.

<Image Recording>

Image recording was performed using the above-described image recording apparatus.

The pretreatment liquid, the first ink, and the second ink described above were loaded into the image recording apparatus.

As a non-permeable substrate, an OPP film (product name "PYLEN film-OT", manufactured by Toyobo Co., Ltd., thickness: 25 $\mu$m) was used.

First, the non-permeable substrate was unwound by the unwinding device R1, and the unwound non-permeable substrate was transported in a state in which a tension was applied. The non-permeable substrate being transported was coated with the pretreatment liquid by the gravure coater as the pretreatment liquid applying device P1.

Next, the pretreatment liquid applied to the non-permeable substrate was dried in the pretreatment liquid drying zone DP1.

Next, the first ink was applied in a solid image shape onto the region of the non-permeable substrate, onto which the pretreatment liquid had been applied, by the first ink jet head IJ1, and then passed through the first drying zone D1 without stopping.

Next, the second ink was applied in a solid image shape onto the region of the non-permeable substrate, onto which the pretreatment liquid and the first ink had been applied, by the second ink jet head IJ2.

Next, the second ink was dried in the second drying zone D2.

By the above-described operation, a multicolor image (solid image) having a structure in which a solid image derived from the second ink was overlapped on a solid image derived from the first ink was recorded on the non-permeable substrate having a length of 1,000 m, and an image recorded material was obtained.

Next, the obtained image recorded material was air-cooled, and then wound by the winding device R2 including a winding core to obtain a roll of the image recorded material.

An application amount of the pretreatment liquid was 1.7 g/m$^2$.

The pretreatment liquid was dried under conditions of 40°C and 3 seconds.

The second ink was dried under conditions of 70°C and 20 seconds.

The distance between the first ink jet head IJ1 and the second ink jet head IJ2 (hereinafter, also referred to as a distance between bars), the transport speed of the non-permeable substrate, the droplet interval (T seconds) between the first ink and the second ink, the volume (V1; pL) of the liquid droplet of the first ink during jetting, and the volume (V2; pL) of the liquid droplet of the second ink during jetting were set to the values shown in Table 1 and Table 2, respectively.

<Contact angle θ (°) of first ink on the non-permeable substrate to which pretreatment liquid has been applied>

The pretreatment liquid was applied onto the non-permeable substrate, dried, and then the non-permeable substrate onto which the pretreatment liquid had been applied was cut out to obtain a measurement sample. 2.0 $\mu$L of the first ink was added dropwise onto the region of the measurement sample to which the pretreatment liquid had been applied, and the contact angle θ (°) of the first ink at a point in time when T seconds had elapsed from the dropwise addition was measured.

The contact angle was measured at 20°C using a contact angle meter (product name "DM-501", manufactured by Kyowa Interface Science Co., Ltd.).

The obtained results are shown in Table 1 and Table 2.

<Measurement of L*1 and L*2>

Each of the monochromatic solid images of the first ink and the second ink was recorded under the same conditions as those in the image recording described above.

The L* value of the monochromatic solid image was measured through the non-permeable substrate with X-rite exact (manufactured by X-Rite, Inc.) from the rear surface (that is, the surface opposite to the image recording surface) of the non-permeable substrate on which the monochromatic solid image was recorded. In this case, a white surface portion of a concealment rate measurement test paper manufactured by TP Giken Co., Ltd. was placed on the image recording surface side of the non-permeable substrate, and L* was measured.

The L* value of the monochromatic solid image of the first ink was denoted by L*1, and the L* value of the monochromatic solid image of the second ink was denoted by L*2.

The obtained results are shown in Table 1 and Table 2.

<Measurement of Av1 and Av2>

The acid value (mgKOH/g) of each of the first ink and the second ink was measured by the following method, and the obtained values were denoted as Av1 (mgKOH/g) and Av2 (mgKOH/g), respectively.

The obtained results are shown in Table 1 and Table 2.

The acid value of each ink was calculated by preparing a diluted liquid obtained by diluting each ink with tetrahydrofuran (THF) at 10 times the volume, completely neutralizing the obtained diluted liquid with KOH, and then titrating the diluted liquid with HCl.

<Solid content S1 in first ink (mass%) and solid content S2 in second ink (mass%)>

The solid content S1 (% by mass) in the first ink and the solid content S2 (% by mass) in the second ink are shown in Table 1 and Table 2.

S1 and S2 are both the content (% by mass) of the solid content (that is, the pigment, the pigment dispersion resin, and the resin particles) with respect to the total amount of the ink.

In the present examples and the comparative examples, S1 and S2 were both determined based on the mass of the dried product obtained by filtering the ink after precipitating the ink with 0.1 N hydrochloric acid, filtering the ink while washing with 0.1 N hydrochloric acid, and drying the remaining solid.

<Calculation of Value (1)>

A value (1) was calculated by the following formula.

The results are shown in Tables 1 and 2.

$$\text{Value (1)} = (V1)^{1/3} \times (1 + \cos\theta) \times 14$$

<Calculation of Value (2)>

A value (2) was calculated by the following formula.

The results are shown in Tables 1 and 2.

In Tables 1 and 2, the value of |Av1/S1 - Av2/S2| is also shown together.

$$\text{Value (2)} = |Av1/S1 - Av2/S2| \times (Av2 - Av1)/T$$

<Calculation of Value (3)>

A value (3) was calculated by the following formula.

The results are shown in Tables 1 and 2.

In Tables 1 and 2, the value of |L2*-L1*| is also shown together.

<Evaluation>

Using the obtained image recorded material, each of streaks, bleeding, and dot embedding of the second ink was evaluated as follows.

The results are shown in Tables 1 and 2.

(Streaks)

The roll of the obtained image recorded material was unwound, one head was visually observed, and the number of streaks generated in the multiple color image (solid image) of the image recorded material along the transport direction of the non-permeable substrate was confirmed.

Based on the result of the confirmation, the streaks in the image were evaluated according to the following evaluation standards.

- Evaluation standard for streak -

    A: number of streaks was 0 or more and less than 4.
    B: number of streaks was 4 or more and less than 8.
    C: number of streaks was 8 or more.

(Bleeding)

A multicolor image having a structure in which a character image by the second ink was recorded on a solid image formed of the first ink was recorded under the same conditions as those of the image recording described above, except that the second ink was jetted in the form of the character image. The character image formed of the second ink was a character image shown in Fig. 2. The character image was recorded in sizes of 5 pt, 6 pt, 7 pt, and 8 pt.
The character image in the obtained multicolor image was visually observed, and bleeding of the image was evaluated according to the following evaluation standard.

- Evaluation standard for bleeding -

AA: there was no collapse of the character image in all sizes of 5 pt, 6 pt, 7 pt, and 8 pt.

    A: there was no collapse of the character image at sizes of 6 pt, 7 pt, and 8 pt, but there is collapse of the character image at a size of 5 pt.
    B: there was no collapse of the character image at sizes of 7 pt and 8 pt, but there was collapse at sizes of 5 pt and 6 pt.
    C: there was no collapse of the character image at a size of 8 pt, but there was collapse at sizes of 5 pt, 6 pt, and 7 pt.
    D: the character image was crushed in all sizes of 5 pt, 6 pt, 7 pt, and 8 pt.

(Burial of second color dots)

A multicolor image having a structure in which a dot image of the second ink was recorded on a solid image of the first ink was recorded under the same conditions as those in the image recording, except that the second ink was jetted in the form of a dot image. In this multicolor image, the second ink was jetted in a liquid droplet amount of 2.1 pL in a region of 2 cm × 2 cm in the solid image of the first ink, and the recording was performed such that 200 dots were formed.
Among 200 dots formed with the second ink, the proportion of the number of "buried dots" buried in the solid image formed with the first ink was checked, and the burial of the dots of the second color was evaluated according to the following evaluation standard.

- Evaluation standard for dot burial of second color -

    A: the proportion of buried dots is less than 1%.

    B: the proportion of the buried dots is 1% or more and less than 15%.

    C: the proportion of the buried dots was 15% or more and less than 30%.

    D: the proportion of buried dots was 30% or more.

[Table 1]

| | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| First Ink | | K1 | K1 | K1 | K1 | Y2 | K1 | K1 | K1 | K1 | K2 | K3 |
| L1* | | 9.3 | 9.3 | 9.3 | 9.3 | 89.7 | 9.3 | 9.3 | 9.3 | 9.3 | 9.3 | 9.3 |
| Second Ink | | C1 | M1 | Y1 | Y2 | K1 | C1 | C1 | C1 | C1 | C1 | Cl |
| L2* | | 58.4 | 50.8 | 89.7 | 89.7 | 9.3 | 58.4 | 58.4 | 58.4 | 58.4 | 58.4 | 58.4 |
| Transport speed | | 50 | 50 | 50 | 50 | 50 | 50 | 50 | 25 | 75 | 50 | 35 |
| Distance between bars | | 0.3 | 0.3 | 0.3 | 0.3 | 0.3 | 0.6 | 0.9 | 0.3 | 0.3 | 0.3 | 0.3 |
| V1(pL) | | 2.1 | 2.1 | 2.1 | 2.1 | 2.1 | 2.1 | 2.1 | 2.1 | 2.1 | 2.1 | 2.1 |
| V2(pL) | | 2.1 | 2.1 | 2.1 | 2.1 | 2.1 | 2.1 | 2.1 | 2.1 | 2.1 | 2.1 | 2.1 |
| $\theta(°)$ | | 37 | 37 | 37 | 37 | 38.4 | 32.8 | 28.5 | 32.8 | 39.3 | 34.3 | 34.6 |
| $\cos\theta$ | | 0.80 | 0.80 | 0.80 | 0.80 | 0.78 | 0.84 | 0.88 | 0.84 | 0.77 | 0.83 | 0.82 |
| Avl(mgKOH/g) | | 4.7 | 4.7 | 4.7 | 4.7 | 3.7 | 4.7 | 4.7 | 4.7 | 4.7 | 4.7 | 1.0 |
| Av2(mgKOH/g) | | 4.0 | 3.6 | 5.3 | 3.7 | 4.7 | 4.0 | 4.0 | 4.0 | 4.0 | 4.0 | 4.0 |
| S1 (% by mass) | | 9.5% | 9.5% | 9.5% | 9.5% | 11.4% | 9.5% | 9.5% | 9.5% | 9.5% | 9.5% | 9.5% |
| S2 (% by mass) | | 9.3% | 10.7% | 11.4% | 11.4% | 9.5% | 9.3% | 9.3% | 9.3% | 9.3% | 9.3% | 9.3% |
| T (second) | | 0.36 | 0.36 | 0.36 | 0.36 | 0.36 | 0.72 | 1.08 | 0.72 | 0.24 | 0.36 | 0.51 |
| Value (1) | | 32.2 | 32.2 | 32.2 | 32.2 | 32.0 | 33.0 | 33.7 | 33.0 | 31.8 | 32.7 | 32.7 |
| \|Av1/S1-Av2/S2\| | | 6.5 | 15.7 | 2.2 | 16.5 | 16.5 | 6.5 | 6.5 | 6.5 | 6.5 | 6.5 | 32.1 |
| Value (2) | | -12.7 | -48.4 | 4.0 | -44 | 44 | -6.4 | -4.2 | -6.4 | -19.1 | -12.7 | 185.4 |
| Value (3) | | -626 | -2011 | 322 | -3554 | 3554 | -313 | -209 | -313 | -939 | -626 | 9116 |
| \|L2*-L1*\| | | 49.2 | 41.6 | 80.5 | 80.5 | 80.5 | 49.2 | 49.2 | 49.2 | 49.2 | 49.2 | 49.2 |
| Evaluation | Bleeding | A | A | B | A | C | A | A | A | A | A | C |
| | burying of dots of the second ink | A | C | A | C | A | A | A | A | A | A | A |
| | Streaks | A | A | A | A | A | A | A | A | A | A | A |

[Table 2]

| | Example 12 | Example 13 | Example 14 | Example 15 | Example 16 | Example 17 | Example 18 | Comparative Example 1 | Comparative Example 2 | Comparative Example 3 | Comparative Example 4 |
|---|---|---|---|---|---|---|---|---|---|---|---|
| First Ink | K1 | K2 | K1 | K1 | C1 | C1 | K1 | K3 | K4 | K5 | K1 |
| L1* | 9.3 | 9.3 | 9.3 | 9.3 | 58.4 | 58.4 | 9.3 | 9.3 | 9.3 | 9.3 | 9.3 |
| Second Ink | C2 | M1 | Y1 | M1 | K1 | M1 | C1 | C1 | Y1 | Y1 | C2 |
| L2* | 58.4 | 50.8 | 89.7 | 50.8 | 9.3 | 50.8 | 58.4 | 58.4 | 89.7 | 89.7 | 58.4 |
| Transport speed | 25 | 50 | 50 | 50 | 50 | 50 | 100 | 50 | 50 | 50 | 50 |
| Distance between bars | 0.3 | 0.3 | 0.9 | 0.6 | 0.3 | 0.3 | 0.15 | 0.3 | 0.3 | 0.3 | 0.3 |
| V1(pL) | 2.1 | 2.1 | 2.1 | 2.1 | 2.1 | 2.1 | 2.1 | 2.1 | 2.1 | 2.5 | 2.1 |
| V2(pL) | 2.1 | 2.1 | 2.1 | 2.1 | 2.1 | 2.1 | 2.1 | 2.1 | 2.1 | 2.5 | 2.1 |
| θ(°) | 37 | 34.3 | 28.5 | 32.8 | 39.8 | 39.8 | 54.2 | 36.8 | 57.8 | 28.3 | 37 |
| cosθ | 0.80 | 0.83 | 0.88 | 0.84 | 0.77 | 0.77 | 0.58 | 0.80 | 0.53 | 0.88 | 0.80 |
| Av1(mgKOH/g) | 4.7 | 4.7 | 4.7 | 4.7 | 4.0 | 4.0 | 4.7 | 1.0 | 4.7 | 4.7 | 4.7 |
| Av2(mgKOH/g) | 1.1 | 3.6 | 5.3 | 3.6 | 4.7 | 47 | 4.0 | 4.0 | 5.3 | 5.3 | 1.1 |
| S1 (% by mass) | 9.5% | 9.5% | 9.5% | 9.5% | 9.3% | 9.3% | 9.5% | 9.5% | 9.5% | 9.5% | 9.5% |
| S2 (% by mass) | 9.3% | 10.7% | 11.4% | 10.7% | 9.5% | 9.5% | 9.3% | 9.3% | 11.4% | 11.4% | 9.3% |
| T (second) | 0.72 | 0.36 | 1.08 | 0.72 | 0.36 | 0.36 | 0.09 | 0.36 | 0.36 | 0.36 | 0.36 |
| Value (1) | 32.2 | 32.7 | 33.7 | 33.0 | 31.7 | 31.7 | 28.4 | 32.3 | 27.5 | 35.7 | 32.2 |
| \|Av1/S1-Av2/S2\| | 37.2 | 15.7 | 2.2 | 15.7 | 6.5 | 6.5 | 6.5 | 32.1 | 2.2 | 2.2 | 37.2 |
| Value (2) | -184 | -48.4 | 1.3 | -24.2 | 12.7 | 12.7 | -50.9 | 265 | 4.0 | 4.0 | -368 |
| Value (3) | -9052 | -2011 | 107 | -1005 | 626 | 97 | -2503 | 13023 | 322 | 322 | -18105 |
| \|L2*-L1*\| | 49.2 | 41.6 | 80.5 | 41.6 | 49.2 | 7.6 | 49.2 | 49.2 | 80.5 | 80.5 | 49.2 |
| Evaluation — Bleeding | A | C | B | B | C | B | A | D | A | D | A |
| Evaluation — burying of dots of the second ink | C | B | A | B | A | A | C | A | D | A | D |
| Evaluation — Streaks | A | A | A | A | A | A | A | A | C | A | A |

As shown in Tables 1 and 2, in Examples 1 to 18 in which the value (1) was in a range of 28.0 to 35.0 and the value (2) was in a range of -200 to 200, bleeding of the multicolor image and the burying of dots of the second ink were suppressed.

Contrary to Examples, Comparative Examples showed the following results.

In Comparative Example 1 in which the value (2) was greater than 200, bleeding of the multicolor image occurred.
In Comparative Example 2 in which the value (1) was 28.0 or less, the second ink was buried in the dots.
In Comparative Example 3 in which the value (1) was greater than 35.0, bleeding of the multicolor image occurred.
In Comparative Example 4 in which the value (2) was less than -200, the second ink was buried with dots.
From the results of Examples 5, 13, and 15, it was found that in a case where the value (3) was -2000 to 2000 (Example 15), bleeding of the multicolor image was further suppressed.
From the results of the comparison between Example 3 and Example 4, it was found that in a case where Av1 was larger than Av2 (Example 4), the bleeding of the multicolor image was further suppressed.
From the comparison between Example 4 and Example 5, it was found that in a case where the L* value L1* of the first ink was lower than the L* value L2* of the second ink (Example 4), bleeding of the multicolor image was further suppressed.

[Examples 101 and 102]

<Example of Four Colors>

In the image recording apparatus used for the image recording of Example 1, a third ink jet head for a third ink and a fourth ink jet head for a fourth ink were added on the downstream side of the second ink jet head IJ2 and on the upstream side of the second drying zone D2, and image recording was performed in which the four colors of ink were sequentially applied onto the region to which the pretreatment liquid had been applied.
As the first ink which is the first color, the second ink which is the second color, the third ink which is the third color, and the fourth ink which is the fourth color, inks shown in Table 3 were used.
The amount of ink droplets during the jetting was set to 0.5 pL for all inks, and a multicolor image with a halftone dot rate of 25% was recorded with a droplet amount of 2.0 pL in total of four colors.
The obtained multicolor image was observed from the image recording surface side, and graininess (whether or not periodic unevenness was present) was evaluated according to the following evaluation standard.

A: no periodic unevenness was visible upon observation from a position 30 cm away from the image recording surface.
B: periodic unevenness was visible from a position 30 cm away from the image recording surface, but periodic unevenness was not visible from a position 50 cm away from the image recording surface.
C: periodic unevenness was visible upon observation from a position 50 cm away from the image recording surface.

[Table 3]

| Example of Four Colors | | Example 101 | Example 102 |
|---|---|---|---|
| Droplet order | First ink | K1 | K1 |
| | Second ink | C1 | C1 |
| | Third ink | M1 | M1 |
| | Four ink | Y1 | Y3 |
| Volume of liquid droplet (pL) | First ink | 0.5 | 0.5 |
| | Second ink | 0.5 | 0.5 |
| | Third ink | 0.5 | 0.5 |
| | Four ink | 0.5 | 0.5 |

(continued)

| Example of Four Colors | | Example 101 | Example 102 |
|---|---|---|---|
| Acid value of ink (mgKOH/g) | Av1 | 4.7 | 4.7 |
| | Av2 | 4.0 | 4.0 |
| | Av3 | 3.6 | 3.6 |
| | Av4 | 5.3 | 3.4 |
| Graininess | | B | A |

As shown in Table 3, it can be seen that in a case of using four color inks, it is more preferable to satisfy a relationship of Av1 > Av2 > Av3 > Av4" (inequality (4)) from the viewpoint of graininess of the multicolor image (that is, Example 102).

[Examples 201 and 202]

<Example of 4 colors + white>

The third ink jet head for a third ink, the fourth ink jet head for a fourth ink, and the ink jet head for a white ink were added on the downstream side of the second ink jet head IJ2 in the image recording apparatus used for the image recording of Example 1 and on the upstream side of the second drying zone D2, and the image recording was performed by sequentially applying the four-color ink and the white ink on the region to which the pretreatment liquid had been applied.
As the first ink which is the first color, the second ink which is the second color, the third ink which is the third color, the fourth ink which is the fourth color, and the white ink which is applied last, the inks shown in Table 4 were used.
For the ink droplet amount during the jetting, the first ink to the fourth ink were set to 0.5 pL, and a multicolor image with a halftone dot rate of 25% was recorded at a droplet amount of 2.0 pL in total of four colors. A white solid image formed of a white ink was recorded to cover the multicolor image. The droplet amount of the white ink was set to 2.7 pL.
The multicolor image covered with the white solid image was observed from the image recording surface side, and the white solid unevenness was evaluated according to the following evaluation standard.

A: white solid unevenness was not visible by observation from a position 30 cm away from the image recording surface.
B: white solid unevenness was visible from a position 30 cm away from the image recording surface, but white solid unevenness was not visible from a position 50 cm away from the image recording surface.
C: white solid unevenness was visible upon observation from a position 50 cm away from the image recording surface.

[Table 4]

| Example of Four Colors | | Example 201 | Example 202 |
|---|---|---|---|
| Droplet order | First ink | K1 | K1 |
| | Second ink | C1 | C1 |
| | Third ink | M1 | M1 |
| | Four ink | Y3 | Y3 |
| | White ink | W1 | W2 |
| Volume of liquid droplet (pL) | First ink | 0.5 | 0.5 |
| | Second ink | 0.5 | 0.5 |
| | Third ink | 0.5 | 0.5 |
| | Four ink | 0.5 | 0.5 |
| | White ink | 2.7 | 2.7 |

(continued)

| Example of Four Colors | | Example 201 | Example 202 |
|---|---|---|---|
| Acid value of ink (mgKOH/g) | Av1 | 4.7 | 4.7 |
| | Av2 | 4.0 | 4.0 |
| | Av3 | 3.6 | 3.6 |
| | Av4 | 3.4 | 3.4 |
| | White ink | 5.0 | 4.5 |
| Result of whire | White solid unevenness | A | B |

As shown in Table 4, it can be seen that in a case of using the four color inks and the white ink, it is more preferable that the acid value of the white ink is higher than any of Av1, Av2, Av3, and Av4 (that is, Example 202).

Explanation of References

A1:      non-permeable substrate
R1:      unwinding device
P1:      pretreatment liquid applying device
IJ1:     first ink jet head
IJ2:     second ink jet head
DP1:     pretreatment liquid drying zone
D1:      first drying zone
D2:      second drying zone
R2:      winding device

The disclosure of JP2023-047328 filed on March 23, 2023 is incorporated herein by reference.
All publications, patent applications, and technical standards mentioned in the present disclosure are herein incorporated by reference to the same extent as if each individual publication, patent application, and technical standard were specifically and individually indicated to be incorporated by reference.

**Claims**

1.   An image recording method comprising:

a step of applying a pretreatment liquid containing water, an aggregating agent, and a resin onto a non-permeable substrate;
a step of applying, by an ink jet recording method, a first ink containing water, a first pigment, and a resin onto a region of the non-permeable substrate onto which the pretreatment liquid has been applied; and
a step of applying, by an ink jet recording method, a second ink containing water, a second pigment, and a resin onto a region of the non-permeable substrate onto which the pretreatment liquid and the first ink have been applied,
wherein Value (1) is 28.0 to 35.0, and
Value (2) is -200 to 200,

$$\text{Value (1)} = (V1)^{1/3} \times (1 + \cos\theta) \times 14,$$

$$\text{Value (2)} = |Av1/S1 - Av2/S2| \times (Av2 - Av1)/T,$$

in Value (1),

V1 represents a volume of a liquid droplet of the first ink in a case of application of the first ink, in units of pL,

and

$\theta$ represents a contact angle of the first ink at a time point when T seconds have elapsed after the first ink has landed on the region onto which the pretreatment liquid has been applied on the non-permeable substrate, the contact angle being in units of °,

in Value (2),

Av1 represents an acid value of the first ink in units of mgKOH/g,
Av2 represents an acid value of the second ink in units of mgKOH/g,
S1 represents a solid content of the first ink in units of % by mass,
S2 represents a solid content of the second ink in units of % by mass, and
T represents a droplet interval between the first ink and the second ink in units of seconds.

2. The image recording method according to claim 1,
wherein Value (3) is -2000 to 2000,

$$\text{Value (3)} = \text{Value (2)} \times |\text{L2*} - \text{L1*}|,$$

in value (3), L1* represents an L* value of the first ink in the L*a*b* color system, and L2* represents an L* value of the second ink in the L*a*b* color system.

3. The image recording method according to claim 1,
wherein the Av1 is larger than the Av2.

4. The image recording method according to claim 1,
wherein L1* which is an L* value of the first ink in an L*a*b* color system is lower than L2* which is an L* value of the second ink in the L*a*b* color system.

5. The image recording method according to claim 1, further comprising:

a step of applying, by an ink jet recording method, a third ink containing water, a third pigment, and a resin onto a region of the non-permeable substrate onto which the pretreatment liquid, the first ink, and the second ink have been applied; and
a step of applying, by an ink jet recording method, a fourth ink containing water, a fourth pigment, and a resin onto a region of the non-permeable substrate onto which the pretreatment liquid, the first ink, the second ink, and the third ink have been applied,
wherein in a case where an acid value of the third ink is represented by Av3 in units of mgKOH/g and an acid value of the fourth ink is represented by Av4 in units of mgKOH/g, a relationship of Inequality (4) is satisfied,

$$\text{Av1} > \text{Av2} > \text{Av3} > \text{Av4} \ldots \text{Inequality (4)}.$$

6. The image recording method according to claim 5, further comprising:

a step of applying, by an ink jet recording method, a white ink containing water, a white pigment, and a resin onto a region of the non-permeable substrate onto which the pretreatment liquid, the first ink, the second ink, the third ink, and the fourth ink have been applied,
wherein an acid value of the white ink in units of mgKOH/g is higher than any of Av1, Av2, Av3, and Av4.

7. An image recording apparatus used in the image recording method according to any one of claims 1 to 6, the image recording apparatus comprising:

a pretreatment liquid applying device that applies the pretreatment liquid onto one surface of the non-permeable substrate;
a first ink jet head that applies the first ink; and
a second ink jet head that applies the second ink,
wherein Value (1) is 28.0 to 35.0, and

Value (2) of -200 to 200.

FIG. 1

FIG. 2

## INTERNATIONAL SEARCH REPORT

| International application No. |
|---|
| **PCT/JP2024/007873** |

| A. | CLASSIFICATION OF SUBJECT MATTER |
|---|---|

*B41M 5/00*(2006.01)i; *B41J 2/01*(2006.01)i; *B41J 2/21*(2006.01)i; *C09D 11/40*(2014.01)i
FI:  B41M5/00 120; B41J2/01 123; B41J2/01 401; B41J2/21; B41M5/00 100; B41M5/00 112; B41M5/00 132; C09D11/40

According to International Patent Classification (IPC) or to both national classification and IPC

| B. | FIELDS SEARCHED |
|---|---|

Minimum documentation searched (classification system followed by classification symbols)

B41M5/00; B41J2/01; B41J2/21; C09D11/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2023/037825 A1 (FUJIFILM CORPORATION) 16 March 2023 (2023-03-16) claims, examples, paragraph [0172] | 1-7 |
| A | WO 2021/131496 A1 (FUJIFILM CORPORATION) 01 July 2021 (2021-07-01) | 1-7 |
| A | WO 2021/084960 A1 (FUJIFILM CORPORATION) 06 May 2021 (2021-05-06) | 1-7 |
| A | JP 2019-172888 A (FUJIFILM CORPORATION) 10 October 2019 (2019-10-10) | 1-7 |
| A | JP 2010-031267 A (FUJIFILM CORPORATION) 12 February 2010 (2010-02-12) | 1-7 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 March 2024** | **09 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/007873**

| Patent document cited in search report | | | Publication date (day/month/year) | Patent family member(s) | | | Publication date (day/month/year) |
|---|---|---|---|---|---|---|---|
| WO | 2023/037825 | A1 | 16 March 2023 | (Family: none) | | | |
| WO | 2021/131496 | A1 | 01 July 2021 | US | 2022/0258495 | A1 | |
| WO | 2021/084960 | A1 | 06 May 2021 | US | 2022/0227154 | A1 | |
| | | | | EP | 4052906 | A1 | |
| | | | | CN | 114599747 | A | |
| JP | 2019-172888 | A | 10 October 2019 | (Family: none) | | | |
| JP | 2010-031267 | A | 12 February 2010 | US | 2010/0003408 | A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2022102449 A
- WO 2020195360 A
- JP 2002012607 A
- JP 2002188025 A
- JP 2003026978 A
- JP 2003342503 A
- WO 2021221069 A

- JP 2015025076 A
- WO 2021192720 A
- JP 54059936 A
- JP S5459936 A
- JP 2003306623 A
- JP 2015083688 A
- JP 2023047328 A

### Non-patent literature cited in the description

- Industrial Organic Pigments. **W. HERBST** ; **K. HUNGER**. Encyclopedia of Pigments. 2000